# EUROPÄISCHE PATENTSCHRIFT

(11) **EP 0 671 261 B1**
(45) Veröffentlichungstag und Bekanntmachung des Hinweises auf die Patenterteilung: **06.05.1998**
(21) Anmeldenummer: 94101572.9
(22) Anmeldetag: 02.02.1994
(51) Int. Cl.: B41C 1/14, B23K 26/00

(54) **Verfahren und Vorrichtung zur Herstellung einer Siebdruckschablone**
Method and apparatus for the preparation of a printing screen
Procédé et dispositif de fabrication d'un écran sérigraphique

(43) Veröffentlichungstag der Anmeldung: 13.09.1995
(60) Teilanmeldung: 97118256.3
(73) Patentinhaber: Schablonentechnik Kufstein Aktiengesellschaft, 6330 Kufstein (AT)
(72) Erfinder: Rückl, Siegfried, A-6322 Langkampfen (AT)
(74) Vertreter: Urner, Peter, Dipl.-Phys.

(56) Entgegenhaltungen:
- EP-A- 0 320 137
- EP-A- 0 338 612
- DE-A- 3 601 327
- FR-A- 2 417 033

## Beschreibung

Die Erfindung betrifft ein Verfahren sowie eine Vorrichtung zur Herstellung einer Siebdruckschablone gemäß den Oberbegriffen der Patentansprüche 1 und 11.

Aus der DE 36 01 327 A1 ist es bereits bekannt, zur Bildung einer dünnen Siebdruckschablone, insbesondere für den Textildruck, einen z. B. galvanoplastisch hergestellten und äußerst dünnwandigen Siebdruckzylinder aus z. B. reinem Nickel zu verwenden, der eine Vielzahl kleiner Durchtrittsöffnungen aufweist. Dieser gleichmäßig perforierte Siebdruckzylinder trägt auf seiner äußeren Oberfläche eine dünne Lackschicht, die seine Durchtrittsöffnungen verschließt. Um ein gewünschtes Druckmuster zu erhalten, wird in einem eigenen Arbeitsgang die Oberfläche des Siebdruckzylinders bereichsweise freigelegt, und zwar durch Abtragen der auf ihr liegenden Lackschicht. Bei diesem Arbeitsgang wird ein Laser verwendet, der entweder den Lack an den freizulegenden Stellen abbrennt bzw. abdampft oder einen anders gearteten lichtempfindlichen bzw. photopolymerisierbaren Lack durch intensive Belichtung vorvernetzt oder polymerisiert. Auch gibt es Lacke, deren Kohäsionsvermögen durch intensive Lichteinwirkung so weit geschädigt wird, daß sie durch eine anschließende chemische Nachbehandlung von den belichteten Stellen abgetragen werden können.

Der Laserstrahl wird auf die Lackschicht fokussiert und sehr rasch einund ausgeschaltet, oft bis zu einigen Millionen mal in der Sekunde, wobei er gleichzeitig relativ zur Lackoberfläche verschoben wird, so daß die kleinen Fokusflecke in der Summe ihrer Belichtungsergebnisse das gewünschte Muster der Siebdruckschablone hervorbringen.

Üblicherweise rotiert die Siebdruckschablone relativ schnell, beispielsweise mit 1.500 Umdrehungen pro Minute, wobei gleichzeitig der Fokusfleck des auf den Siebdruckzylinder wenigstens annähernd radial auftreffenden Laserstrahls in Axialrichtung des Siebdruckzylinders verschoben wird, so daß sich der Fokusfleck auf der Oberfläche des Siebdruckzylinders entlang einer Schraubenlinie bewegt. Die Steigung der Schraubenlinie entspricht etwa dem Durchmesser des Fokusflecks oder ist geringfügig kleiner. Der gesamte Prozeß wird durch einen schnellen Computer gesteuert, dem Umfangs- und Achsposition des Fokusflecks durch Abfrage entsprechender Sensoren jeweils bekannt sind, so daß die Einzelbelichtungen richtig zu einem Gesamtmuster aufaddiert werden.

Der auf seiner Oberfläche die Lackschicht tragende Siebdruckzylinder wird zum Zwecke der Bemusterung auf einen expandierbaren, genau rundlaufenden Spannzylinder geschoben, was jedoch relativ umständlich ist. Sollen darüber hinaus Siebdruckzylinder mit unterschiedlichem Durchmesser bearbeitet werden, so ist es bei größeren Durchmesserabweichungen auch erforderlich, den relativ schweren und unhandlichen Spannzylinder zu wechseln.

Aus der DE 29 02 902 A1 ist es ferner bekannt, eine Siebdruckschablone dadurch herzustellen, daß auf ein mit einem lichtempfindlichen Photolack beschichtetes metallisches Zylindersieb ein Film aufgelegt wird, durch den hindurch der Photolack belichtet wird. Das metallische Zylindersieb wird an seinen beiden Stirnseiten durch Zentrierflansche gelagert, die gemeinsam mit dem Zylindersieb einen Druckraum bilden, in den ein Druckmedium eingeleitet wird, um das Zylindersieb durch Druckbeaufschlagung zu spannen. Danach wird derbereits erwähnte Film auf die Außenfläche des so behandelten Zylindersiebs gelegt und belichtet. Der Grund für das Spannen des Zylindersiebs liegt darin, dessen Eigenstabilität zu erhöhen, die üblicherweise nicht ausreicht, wenn auf der Außenseite des Zylinders eine Oberflächenbearbeitung vorgenommen wird, beispielsweise eine mechanische oder photographische Dessinierung. Für solche Arbeiten ist eine relativ hohe Formstabilität erforderlich.

Der Erfindung liegt die Aufgabe zugrunde, das Verfahren sowie die Vorrichtung der eingangs genannten Art so weiterzubilden, daß eine einfachere Handhabung des Siebdruckzylinders möglich ist, und zwar ohne Einbuße der Gravurqualität.

Die verfahrensseitige Lösung der gestellten Aufgabe findet sich im kennzeichnenden Teil des Patentanspruchs 1. Dagegen steht die vorrichtungsseitige Lösung der gestellten Aufgabe im kennzeichnenden Teil des Patentanspruchs 11. Vorteilhafte Ausgestaltungen der Erfindung sind den jeweils nachgeordneten Unteransprüchen zu entnehmen.

Ein Verfahren nach der Erfindung zur Herstellung einer Siebdruckschablone, bei dem eine auf der Oberfläche eines sich drehenden Siebdruckzylinders liegende Lackschicht mittels eines wenigstens annähernd radial auf den Siebdruckzylinder auftreffenden und in dessen Axialrichtung bewegten Laserstrahls punktweise bestrahlt wird, zeichnet sich dadurch aus, daß der Siebdruckzylinder nur im Bereich seiner sich gegenüberliegenden Stirnseiten abgestützt und über wenigstens eine dieser Stirnseiten durch ein Druckgas von bis zu 20 000 Pa so aufgeblasen wird, daß er einen kreisrunden Querschnitt erhält.

Dagegen zeichnet sich die erfindungsgemäße Vorrichtung dadurch aus, daß die Einspannvorrichtung aus nur zwei Zentrierflanschen besteht, von denen jeweils einer in eine der Stirnseiten des Siebdruckzylinders einführbar ist, und daß der Siebdruckzylinder über einen Innenkanal in wenigstens einem der Zentrierflansche mit einem Gebläse verbunden ist, das unter einem Drück von bis zu 20 000 Pa stehendes Gas in einer so großen Menge liefert, daß des Giebdrückzylinder einen kreisrunden Querschnitt beibehält.

Nach einer Ausgestaltung der Erfindung kann Druckgas auch über beide Stirnseiten in den Siebdruckzylinder hineingeblasen werden, wobei als Druckgas z. B. Luft Verwendung findet.

Untersuchungen im Zusammenhang mit dem Rundlauf dünner metallischer Zylindersiebe haben zu dem überraschenden Ergebnis geführt, daß es trotz innerer Materialspannungen, die z. B. bei einer galvanischen Herstellung dünnwandiger Nickelschablonen mehr oder weniger zufällig auftreten, möglich ist, diese Zylindersiebe durch geeigneten Innendruck so exakt kreisrund auszuformen, daß bei der Belichtung der auf dem Sieb liegenden Lackschicht der Fokus des Laserstrahls immer im Bereich der Lackschicht verbleibt, wenn sich der Siebdruckzylinder dreht. Statische Formabweichungen des Siebdruckzylinders lassen sich somit weitestgehend kompensieren, so daß sehr gute Gravurergebnisse auch dann erhalten werden, wenn der Siebdruckzylinder bei der Belichtung mit Hilfe eines Laserstrahls nicht über seine ganze Länge auf einer Schablonenspannwalze aufliegt.

Kommt das erfindungsgemäße Verfahren zum Einsatz, so vereinfacht sich darüber hinaus die Handhabung des Siebdruckzylinders ganz erheblich, da er jetzt nicht mehr auf eine Schablonenspannwalze aufgeschoben zu werden braucht und die Montage der Schablonenspannwalze selbst ebenfalls entfallen kann. Es ist nur noch erforderlich, den Siebdruckzylinder auf die Zentrierflansche zu setzen und mit Druckgas zu befüllen, was relativ schnell und bequem möglich ist.

In Weiterbildung der Erfindung kann die Lackschicht mit Hilfe des Laserstrahls weggebrannt werden, um eine Perforation des Siebdruckzylinders zur Herstellung eines Musters bereichsweise freizulegen.

Es hat sich gezeigt, daß es entgegen der herkömmlichen Auffassung doch möglich ist, auch dann durch geeignete Druckbeaufschlagung eine kreisförmige Querschnittsausbildung des Siebdruckzylinders zu gewährleisten, wenn dieser im Bereich seines Umfangs infolge der weggebrannten Lackschicht bereichsweise wieder geöffnet wird. Ein Grund hierfür kann darin gesehen werden, daß die Anfangsdruckbeaufschlagung zu einem Zeitpunkt, zu dem der Zylinder noch geschlossen ist, wenigstens zum Teil schon für eine Reduzierung der inneren Materialspannung sorgt, so daß sich der mit der anschließenden Öffnung des Siebdruckzylinders einhergehende Druckverlust nicht mehr so stark bemerkbar macht und jedenfalls nicht zu einer Zerstörung des zuvor erhaltenen kreisförmigen Zylinderquerschnitts führt.

Darüber hinaus kann nach der Erfindung vorgesehen sein, mit steigender Öffnung des Siebdruckzylinders diesem eine größere Druckgasmenge zuzuführen. Dadurch läßt sich der infolge der Öffnung des Siebdruckzylinders auftretende Druckverlust wenigstens teilweise kompensieren.

Nach einer sehr vorteilhaften Ausgestaltung der Erfindung werden mit dem Druckgas Abdichtkörper in den Siebdruckzylinder hineingeblasen, um ihn im Bereich seiner freigelegten Perforation abzudichten. Diese Abdichtkörper können schicht- oder kugelförmige Körper sein, die auch als lichtreflektierende Körper ausgebildet sein können. Es kann sich hierbei z. B. um kleine Papier-, Kunststoff- oder Metallfolienabschnitte handeln, die rund oder vieleckig ausgebildet sind. Die Abschnitte können z. B. aus Aluminium oder Nickel bestehen oder aus metallisierter Kunststoff-Folie. Möglich sind auch Schaumstoffkugeln z. B. aus Styropor, PU-Schaum oder aus geschäumter Keramik. Alle Kugeln können an ihrer Oberfläche auch metallisiert sein. Wesentlich ist, daß die Abdichtkörper durch den Laserstrahl nicht geschmolzen werden und diese die Schabloneninnenoberfläche nicht verkleben.

Wird der Siebdruckzylinder durch bereichsweises Wegbrennen der Lackschicht geöffnet, so werden die Abdichtkörper durch die Druckgasströmung genau dorthin mitgenommen, wo sich die Öffnungen im Siebdruckzylinder bilden, um diese von innen wieder zu verschließen. Auch dadurch läßt sich der Arbeitsdruck im Innenraum des Siebdruckzylinders konstant halten. Ferner kann erfindungsgemäß vorgesehen sein, zusätzlich zu den Abdichtkörpern ein flüssiges oder pulverförmiges Medium in den Siebdruckzylinder hineinzublasen, um dadurch letztlich auch noch Bereiche zwischen den Abdichtkörpern abzudichten. Dies führt zu einer noch besseren Druckkonstanthaltung im Innern des Siebdruckzylinders. Als flüssiges Abdichtmedium kommt vorzugsweise eine abdampfbare Flüssigkeit zum Einsatz, z. B. Wasser.

Nach einer anderen sehr vorteilhaften Weiterbildung der Erfindung werden nach Herstellung des Musters die Abdichtkörper sowie ggf. das flüssige oder pulverförmige Medium wieder aus dem Siebdruckzylinder herausgesaugt und/oder herausgeblasen. Dadurch wird gewährleistet, daß nach Abschluß der Gravurarbeit eine auch innen saubere Siebdruckschablone der Gravurvorrichtung entnommen werden kann.

Wie bereits erwähnt, weist die Gravurvorrichtung erfindungsgemäß zwei Zentrierflansche auf, von denen jeweils einer in eine der Stirnseiten des Siebdruckzylinders einführbar ist. Der Siebdruckzylinder steht über einen Innenkanal in wenigstens einem der Zentrierflansche mit einem Gebläse in Verbindung, die einen solchen Gasdruck im Innern des Siebdruckzylinders erzeugt, daß dieser einen kreisrunden Querschnitt erhält. Dabei kann des Gebläse eine konstante Druckgasmenge fördern oder eine sich stetig erhöhende Druckgasmenge in Übereinstimmung mit der stetig größer werdenden umfangsseitigen Öffnung des Siebdruckzylinders infolge des Wegbrennens der Lackschicht.

Der Siebdruckzylinder kann aber auch über Innenkanäle in beiden Zentrierflanschen mit jeweils einem Gebläse in Verbindung stehen, so daß beidseitig Druckgas in ihn hineingeblasen werden kann.

Nach einer besonders vorteilhaften Ausgestaltung der erfindungsgemäßen Vorrichtung liegt im Strömungsweg zwischen dem Gebläse und dem Siebdruckzylinder ein Vorratsbehälter, in dem sich Abdichtkörper befinden, die vom geförderten Gasstrom in den Siebdruckzylinder mitgenommen werden. Die Abdichtkörper werden durch den geförderten Gasstrom zunächst aufgewirbelt und ins Innere des Siebdruckzylinders transportiert, um sich genau an denjenigen Stellen abzulagern, an denen der Siebdruckzylinder durch Wegbrennen der Lackschicht geöffnet wird. Dabei können Abdichtkörper auch von beiden Stirnseiten des Siebdruckzylinders in diesen eingeführt werden.

Zwischen dem Vorratsbehälter und dem Siebdruckzylinder ist in noch weiterer Ausgestaltung der Erfindung eine Zuführeinrichtung vorgesehen, um der erzeugten Druckgasströmung ein flüssiges oder pulverförmiges Abdichtmedium zuzusetzen, das von der Strömung zum Siebdruckzylinder mitgenommen wird. Durch dieses Medium lassen sich vorhandene Spalte zwischen bereits abgesetzten Abdichtkörpern verschließen, was zu einer besseren Konstanthaltung des Drucks im Innern des Siebdruckzylinders führt, wie bereits erwähnt. Natürlich läßt sich dieses Abdichtmedium auch durch beide Stirnseiten des Zylinders in diesen einführen.

Um den Siebdruckzylinder nach Beendigung der Gravurarbeit reinigen zu können, läßt sich die Förderrichtung des Gebläses umschalten. Durch den jetzt geförderten Gasstrom lassen sich die Abdichtkörper zurück in ihren Vorratsbehälter transportieren und mit ihnen das pulverförmige Medium, das sich ebenfalls im Vorratsbehälter absetzt und ggf. ausgesiebt werden kann. Ist das Abdichtmedium eine abdampfende Flüssigkeit, so verdampft diese im Laufe der Zeit.

Die Erfindung wird nachfolgend unter Bezugnahme auf die Zeichnung näher beschrieben. Es zeigen:
**Figur 1** ein Ausführungsbeispiel einer Vorrichtung zur Herstellung einer Siebdruckschablone,
**Figur 2** den Detailaufbau der Vorrichtung nach Figur 1 am linken stirnseitigen Ende der Siebdruckschablone,
**Figur 3** den Detailaufbau der Vorrichtung nach Figur 1 am rechten stirnseitigen Ende der Siebdruckschablone,
**Figur 4** eine schematische Darstellung einer Graviervorrichtung mit angeschlossenem Vorratsbehälter für Abdichtkörper und weiterer Zuführeinrichtung für ein flüssiges Abdichtmedium, und
**Figur 5** den Aufbau eines weiteren Vorratsbehälters für Abdichtkörper.

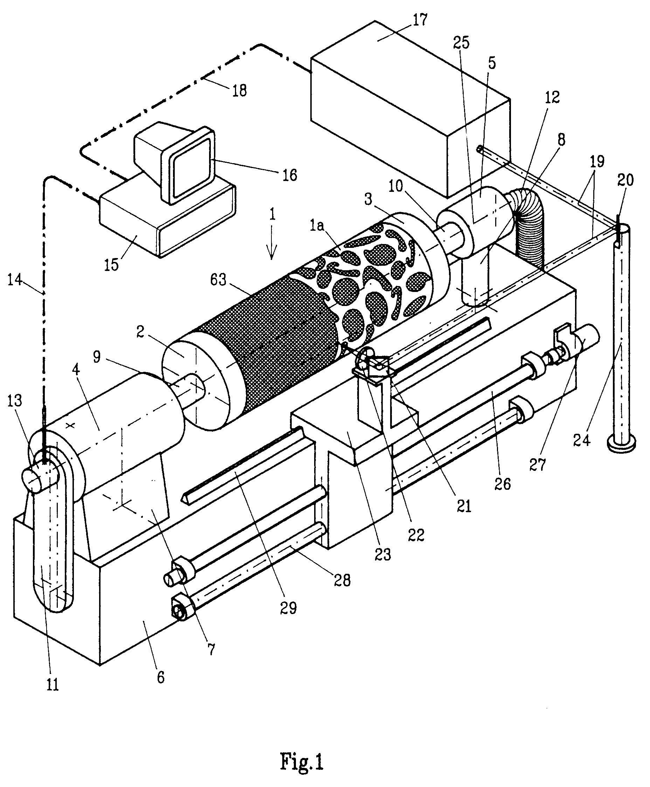

Die Figur 1 zeigt eine perspektivische Ansicht einer erfindungsgemäßen Vorrichtung zur Herstellung einer Siebdruckschablone.

Die Siebdruckschablone trägt das Bezugszeichen 1 und wird an ihren einander gegenüberliegenden Stirnseiten durch jeweils einen Spannkopf 2 bzw. 3 gehalten, die als Zentrierflansche ausgebildet sein können. Diese Spannköpfe 2, 3 sind jeweils in einer Lagerschale 4, 5 drehbargelagert. Die Lagerschalen 4, 5 stützen sich auf einem Maschinenbett 6 ab, und zwar über Stützeinrichtungen 7, 8.

Ein mit dem linken Spannkopf 2 verbundener Hohlwellenabschnitt 9 erstreckt sich in die Lagerschale 4 und ist dort drehbar gelagert. Dieser Hohlwellenabschnitt 9 wird über einen Antriebsstrang in Drehung versetzt, der durch die Stützeinrichtung 7 hindurchläuft bis zu einem Antriebsmotor, der im Maschinenbett 6 angeordnet ist. Bei Drehung des Hohlwellenabschnitts 9 wird durch ihn der Spannkopf 2 mitgenommen, so daß die Siebdruckschablone 1 dadurch in Drehung versetzt wird. Der andere Spannkopf 3 läuft frei um und ist über einen Hohlwellenabschnitt 10 in der Lagerschale 5 gelagert.

Beide Hohlwellenabschnitte 9 und 10 enden im Bereich der Spannköpfe 2 bzw. 3, erstrecken sich also nicht in die Siebdruckschablone 1 hinein, und sind ferner an ihren den Spannköpfen 2,3 abgewandten Enden dicht mit Strömungskanälen 11 und 12 verbunden.

Ein mit dem freien Ende des Hohlwellenabschnitts 9 verbundener Drehwinkelgeber 13 informiert über eine Steuerleitung 14 einen Rechner 15 mit zugehörigem Monitor 16 über die jeweilige Drehlage der Siebdruckschablone 1. Dabei gibt der Rechner 15 entsprechende Ein- bzw. Ausschaltimpulse an einen Laser 17 über eine Steuerleitung 18. Ein Laserstrahl 19 des Lasers 17 wird entsprechend dieser Ein- bzw. Ausschaltimpulse emittiert oder nicht emittiert. Über einen ersten Umlenkspiegel 20 wird der Laserstrahl 19 einem zweiten Umlenkspiegel 21 zugeleitet, der gemeinsam mit einer Fokussierungslinse 22 auf einem bewegbaren Schlitten 23 montiert ist. Der bewegbare Schlitten 23 stütz sich, wie noch erläutert wird, indirekt am Maschinenbett 6 ab, das beispielsweise auf dem Boden steht, ebenso wie ein Ständer 24 zur Halterung des ersten Umlenkspiegels 20.

Im Bereich zwischen dem ersten Umlenkspiegel 20 und dem zweiten Umlenkspiegel 21 verläuft der Laserstrahl 19 parallel zur Längsachse 25 der Siebdruckschablone 1 und wird durch den zweiten Umlenkspiegel 21 so abgelenkt, daß er wenigstens annähernd radial auf den Siebdruckzylinder 1a zuläuft. Dabei wird er durch die Fokussierungslinse 22 auf die Lackschicht 63 fokussiert.

Der bewegbare Schlitten 23 ist in Richtung der Längsachse 25 der Siebdruckschablone 1 verschiebbar. Diese Verschiebung wird durch eine Spindel 26 und einen diese Spindel antreibenden Motor 27 bewirkt. Eine Rundführung 28 und eine Prismenführung 29 sorgen für eine zur Längsachse 25 der Siebdruckschablone 1 genau parallele Bewegung des Schlittens 23. Dabei befindet sich die Prismenführung 29 auf der oberen Fläche des Maschinenbetts 6, während die Spindel 26 und die Rundführung 28 an der Vorderseite des Maschinenbetts 6 parallel zueinander angeordnet sind.

Wie noch genauer beschrieben wird, befinden sich innerhalb des Maschinenbetts 6 Gebläse von denen jeweils eines mit einem der Strömungskanäle 11 und 12 verbunden ist. Durch diese Gebläse läßt sich ein Druckgas über die Strömungskanäle 11, 12, die Hohlwellenabschnitte 9, 10 und die Spannköpfe 2, 3 ins Innere der Siebdruckschablone 1 blasen.

Vorzugsweise ist der Motor 27 zum Antrieb der Spindel 26 ein Schrittmotor, so daß sich durch die Ansteuerimpulse für den Schrittmotor 27 auch die Axialposition des auf den Siebdruckzylinder 1a auftreffenden Laserstrahls 19 bestimmen läßt.

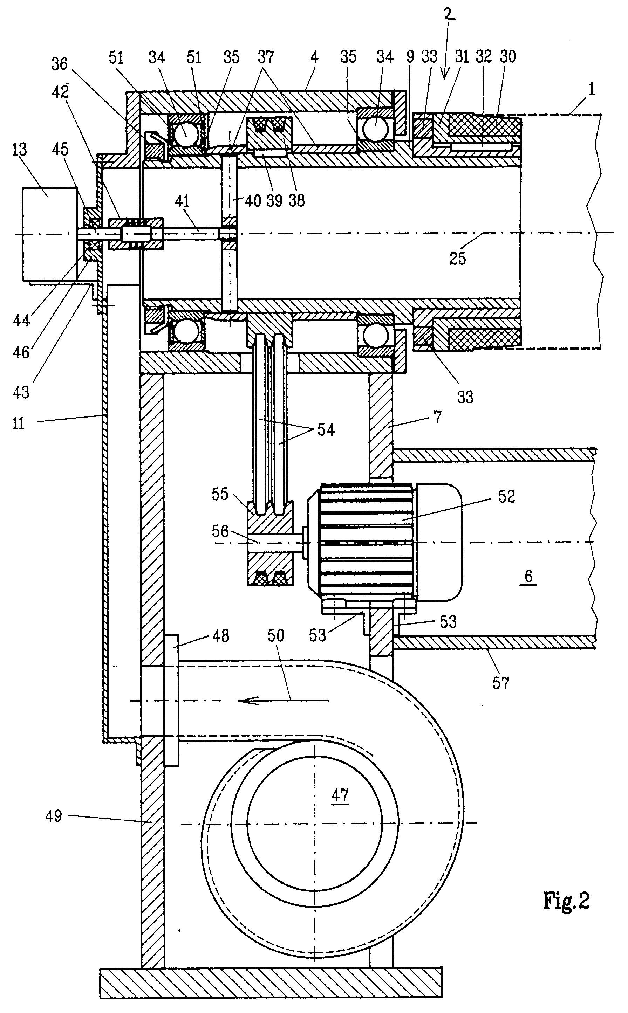

Die Figur 2 zeigt in detallierterer Ausführung den Aufbau der Gravurvorrichtung nach Figur 1 im Bereich des dort linksseitigen Endes des Siebdruckzylinders 1a. Dieser Bereich kann auch als spindelstockseitiger Bereich der Gravurvorrichtung bezeichnet werden. Gleiche Elemente wie in Figur 1 sind mit den gleichen Bezugszeichen versehen.

Die Siebdruckschablone 1 ist mit ihrem linken Ende auf einen zum Spannkopf 2 gehörenden und leicht konischen Mitnehmerring 30 aufgeschoben.

Der Mitnehmerring 30 ist austauschbar und zu diesem Zweck mit einer Hülse 31 unlösbar verbunden, die ihrerseis mit einer Paßfederverbindung 32 vom Hohlwellenabschnitt 9 aufgenommen wird. Magnete 33 halten die Hülse 31 in axialer Richtung fest. Der Hohlwellenabschnitt 9 ist über Kugellager im Spindelstockgehäuse 4 (Lagerschale) drehbar abgestützt. Die Kugellager 34 werden mit ihren Innenringen 35 mittels einer Nutmutter 36 und Distanzhülsen 37 gegen den Hohlwellenabschnitt 9 verspannt. Eine Keilriemenantriebsscheibe 38 ist zwischen den Distanzhülsen 37 vorgesehen, wobei eine Paßfeder 39 für die Übertragung eines Antriebsmoments auf den Hohlwellenabschnitt 9 sorgt. Ein Mitnehmerbolzen 40, der durch eine Querbohrung des Hohlwellenabschnitts 9 mit diesem drehsteif verbunden ist, treibt über eine Welle 41 und eine Ausgleichskupplung 42 den Drehwinkelgeber 13 an. Dieser stützt sich auf einem Winkelteil 43 ab, welches an der Seite des Strömungskanals 11 montiert ist. Ein Wellendichtring 44 sorgt für einen dichten Abschluß des aus dem Drehwinkelgeber 13 herausragenden Wellenschafts 45. Der Wellendichtring 44 befindet sich in einer Wand 46, die einen Wandabschnitt des Strömungskanals bildet, der zwischen dem Strömungskanal 11 und dem Hohlwellenabschnitt 9 liegt.

Über den Strömungskanal 11 an der linken Außenseite des Maschinenbetts 6 bzw. der Stützeinrichtung 7 wird verdichtete Luft aus einem Gebläse 47 zur linken Stirnseite des Hohlwellenabschnitts 9 transportiert und durch diesen hindurch in die Siebdruckschablone 1 geleitet. Das Gebläse 47 liefert Luft mit einem Druck von bis zu 20 000 Pa, und dies in einer so großen Menge, daß trotz eines Austritts dieser Luft aus den Öffnungen der Siebdruckschablone 1, die während der Gravurarbeit freigelegt werden, der Druck innerhalb der Schablone ausreichend hoch bleibt. Dabei befindet sich das Gebläse 47 im Innern bzw. unterhalb des Maschinenbetts 6 und ist über einen Flansch 48 mit der Maschinenbett-Seitenwand 49 verbunden. Der Pfeil 50 gibt die Strömungsrichtung der Luft an.

Damit im Bereich der Kugellager 34 kein Druckverlust auftritt, können diese abdichtende Seitenwände 51 besitzen.

Der bereits erwähnte Motor trägt das Bezugszeichen 52 und ist auf einer Trägereinrichtung 53 innerhalb des Maschinenbetts 6 montiert. Dieser Motor 52 treibt über Keilriemen 54, die die Keilriemenantriebsscheibe 38 umschlingen, den Hohlwellenabschnitt 9 an. Dabei laufen die Keilriemen auch um eine weitere Keilriemenscheibe 55 herum, die auf der Welle 56 des Motors 52 sitzt.

Ein Kastenträger 57 verbindet das linke Ende der Gravurvorrichtung mit ihrem rechten Ende. Dabei ist der Querschnitt des Kastenträgers 57 so groß ausgebildet, daß die Gravurvorrichtung eine ausreichende Steifigkeit und eine geringe Schwingungsanfälligkeit aufweist.

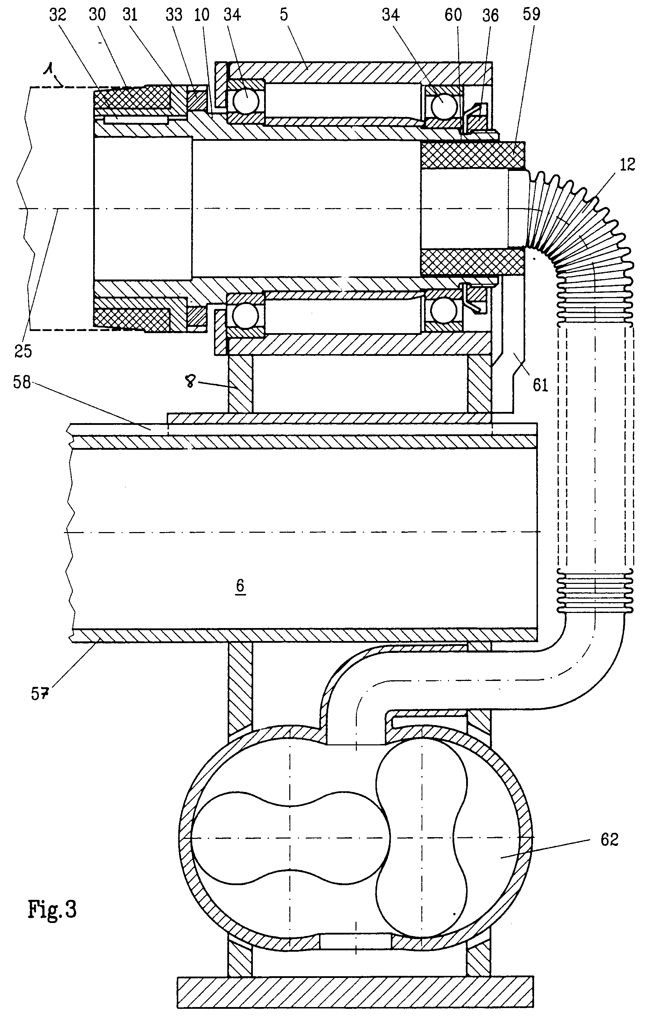

Die Figur 3 zeigt einen Schnitt durch das rechte, reitstockseitige Ende der Gravurvorrichtung nach Figur 1. Gleiche Teile wie in Figur 1 und 2 sind wiederum mit den gleichen Bezugszeichen versehen.

Der Reitstock 5 (rechte Lagerschale) kann auf Führungen 58 verschoben werden, die auf dem Maschinenbett 6 bzw. Kastenträger 57 liegen und sich parallel zur Längsachse 25 erstrecken. Beim Aufrüsten der Graviervorrichtung wird der Reitstock 5 so weit gegen die Siebdruckschablone 1 geschoben, daß der konische Mitnehmerring 30 fest in der Siebdruckschablone 1 sitzt. Mit einer nicht mehr dargestellten Klemmeinrichtung wird der Reitstock 5 im Bereich seiner Stützeinrichtung 8 gegen die Führungen 58 bzw. den Kastenträger 57 verspannt, so daß während des Betriebs ein Lockern und ein Verrutschen des Reitstocks 5 nicht möglich ist. Luft unter erhöhtem Druck wird auf dieser Seite der Siebdruckschablone 1 über eine Gleitdrehdurchführung 59 zugeführt, die mittels eines langen und dünnen Spalts 60 gegen den Hohlwellenabschnitt 10 abgedichtet ist. Der nicht drehbare Teil der Gleitdrehdurchführung 59 wird von einem Halter 61 getragen, der fest mit dem Reitstock 5 bzw. der Stützeinrichtung 8 verbunden ist. Von einem Drehkolbengebläse 62 (Roots-Gebläse) wird Luft über einen langen flexiblen Schlauch 12 dem Innenraum der Siebdruckschablone 1 zugeführt, und zwar durch die Gleitdrehdurchführung 59 und den Hohlwellenabschnitt 10 hindurch. Für die Druckluftversorgung werden hier zweckmäßigerweise Ringkammer-, Wasserring- oder Drehkolbengebläse eingesetzt.

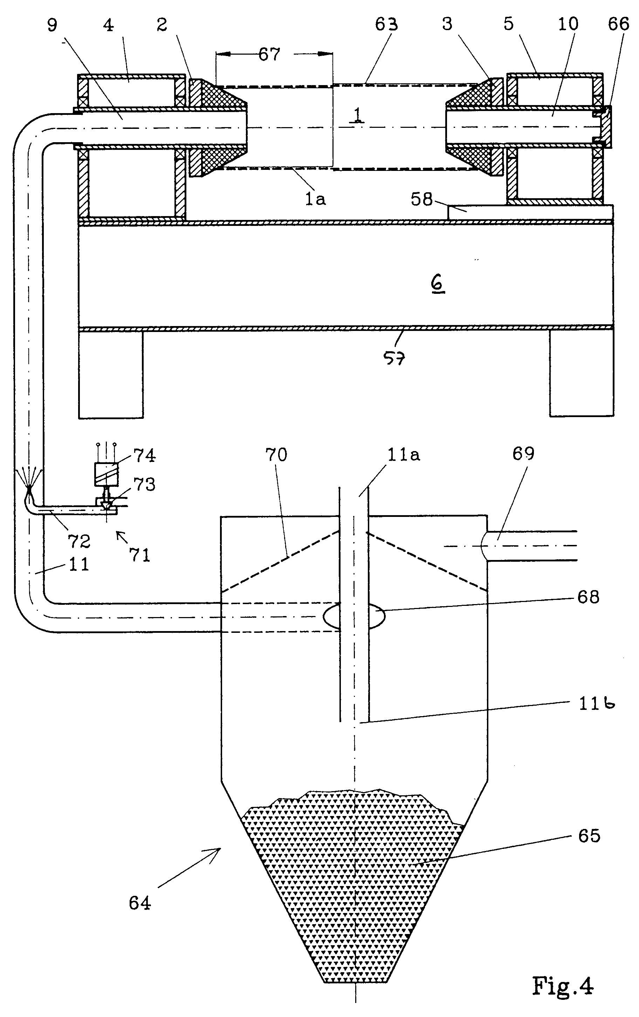

Die Figur 4 zeigt in schematischer Darstellung eine erfindungsgemäße Vorrichtung, bei der im Strömungsweg zwischen dem Gebläse und dem Siebdruckzylinder ein Vorratsbehälter liegt, in dem sich Abdichtkörper befinden, die vom geförderten Gasstrom in den Siebdruckzylinder mitgenommen werden.

Erfindungsgemäß wird die Innenseite der Siebdruckschablone 1 durch kleine Abdicht- bzw. Abdeckkörper laufend innerhalb des durch den Laserstrahl bearbeiteten Bereichs abgedichtet. Die Abdichtkörper können z. B. kleine Papier-, Kunststoff- oder Metallfolienabschnitte sein. Die Abdichtkörper können nach Art der Konfetti aus kleinen runden oder viereckigen Stücken bestehen. Papier hat dabei den Vorteil, billig zu sein. Allerdings besteht hier die Gefahr, daß jener Anteil der Laserstrahlung, der durch die Schablonenöffnungen hindurchgeht, die innere Papierauflage ebenfalls perforiert, wodurch die Effizienz der Abdichtung verringert werden würde. Aus diesem Grunde kann es vorteilhafter sein, dünne und reflektierende Metallabschnitte z. B. aus Aluminium oder Nickel zu verwenden, welche die Laserstrahlung ebenso zurückwerfen wie die Nickelhülse bzw. der Siebdruckzylinder, der die äußere Lackschicht trägt. In Figur 4 ist der Siebdruckzylinder wieder mit dem Bezugszeichen 1a versehen, während die Lackschicht das Bezugszeichen 63 trägt. Auch die Verwendung von dünner aber metallisierter und damit reflektierender Kunststoff-Folie als Abdichtkörper kann in Erwägung gezogen werden. Eine andere Möglichkeit geht dahin, die Öffnungen des Schablonenzylinders mit kleinen Schaumstoffkugeln aus Styropor, PU-Schaum (Polyurethan-Schaum) oder aus geschäumter Keramik abzudichten. Auch diese Kugeln können eine metallische Oberflächenbeschichtung tragen. Wesentlich ist, daß die Abdichtkörper nicht geschmolzen werden, die ansonsten die durch den Laserstrahl von der äußeren Lackschicht 63 befreite Schablonenoberfläche wieder zukleben könnten.

Eine weitere Maßnahme kann darin bestehen, die Abdichtkörper durch eine abdampfbare Flüssigkeit, z. B. Wasser, leicht anzufeuchten, um die zwischen den Abdichtkörpern verbleibenden sehr engen Strömungskapillaren noch weiter abzudichten. Hierdurch läßt sich eine noch bessere Konstanz des Innendrucks im Siebdruckzylinder 1a gewährleisten.

Nach Figur 4 soll die Gravur von der linken Seite des Siebdruckzylinders 1a beginnen, also von der Seite des Spindelstocks 4. Dabei setzt sie sich nach rechts in Richtung des Reitstocks 5 fort. Die Siebdruckschablone 1 soll hierbei den Erfordernissen des Musters entsprechend von der äußeren Lackschicht 63 befreit werden. Dabei liegt die Siebdruckschablone 1 zwischen einem linken, spindelstockseitigen und konusförmigen Spannkopf 2 und einem rechten und reitstockseitigen, konusförmigen Spannkopf 3 und wird vom linken Spannkopf 2 über Reibschluß mitgenommen, d.h. in Drehung versetzt. Durch den Hohlwellenabschnitt 9 hindurch wird unter erhöhtem Druck stehende Gebläseluft ins Innere der Siebdruckschablone 1 geblasen. Bei sehr großen und langen Siebdruckschablonen kann auch durch den Hohlwellenabschnitt 10, der sich im Reitstock 5 befindet, Gebläseluft ins Innere des Siebdruckzylinders 1a gelangen. Luft wird der Siebdruckschablone 1 von dem Gebläse nur dann zugeführt, wenn diese aus der Siebdruckschablone 1 auch austreten kann. Das Austreten erfolgt durch die auf der Innenseite noch nicht abgedeckten Stellen des Schablonenmantels, die durch den Laserstrahl von der äußeren Lackschicht 63 gerade befreit worden sind oder durch die zwischen den Abdichtkörpern verbleibenden Kapillaren. Die Luftströmung im Innern der Siebdruckschablone 1 wird jedenfalls genau zu jenen Stellen hinführen, durch welche noch ein wesentlicher Luftaustritt erfolgt, und dies kann zur gezielten Aufbringung der Abdichtkörper herangezogen werden. Man hat nur im Verlauf des Strömungskanals 11 einen Vorratsbehälter 64 für die Abdichtkörper zu installieren. Von diesem Vorratsbehälter 64 wird immer dann eine Anzahl weiterer Abdichtkörper 65 in die Strömung abgegeben, wenn durch das Freilegen von Öffnungen im Siebdruckzylinder 1a eine stärkere Durchströmung der Siebdruckschablone 1 einsetzt. In dem hier gezeigten Ausführungsbeispiel ist die Siebdruckschablone 1 so kurz, daß eine doppelseitige Luftzufuhr entfallen kann. Der Hohlwellenabschnitt 10 im Reitstock 5 ist daher durch eine Kappe 66 verschlossen. Luft kann jetzt nur im Bereich 67 aus dem Siebdruckzylinder 1a nach außen austreten, in welchem die Lackschicht 63 schon abgetragen wurde.

Nach Beendigung der Gravurarbeit müssen die Abdichtkörper 65 wieder aus der Siebdruckschablone 1 entfernt und am besten in den Vorratsbehälter 64 zurückbefördert werden, damit sie dort für den nächsten Gravurvorgang zur Verfügung stehen. Üblicherweise erfolgt dies durch Umkehren der Strömungsrichtung, d. h. Luft wird nunmehr aus der Schablone abgesaugt. Bei ausreichend großflächig gravierten Siebdruckschablonen steht so viel offener Umfangsbereich zur Verfügung, daß dadurch nur ein geringer Unterdruck in der Schablone entsteht und dieser Druck auch nicht ausreicht, um die Schablone unter dem Einfluß des dann vorliegenden äußeren Überdrucks zu beulen. Die Strömungsmenge ist dann auch so groß, daß die Abdichtkörper wieder in den Vorratsbehälter 64 durch die Luftströmung zurückgetragen werden können.

Nur bei wenig offengelegten, d. h. nur in kleinen Oberflächenbereichen gravierten Siebdruckschablonen kann es vorkommen, daß auf der Außenseite der Siebdruckschablone gegenüber der Innenseite während der Rücksaugphase ein größerer Überdruck vorliegt. Dann kann auch die Strömungsmenge so gering werden, daß eine Rückführung der Abdichtkörper in den Vorratsbehälter 64 wegen der zu geringen Tragwirkung der Strömung nicht mehr möglich ist. In diesem Fall wird der Hohlwellenabschnitt 10 im Reitstock 5 durch Entfernen der Kappe 66 geöffnet, wodurch eine ausreichende Durchströmung der Siebdruckschablone 1 sichergestellt wird. Es liegt auf der Hand, daß im Falle einer doppelseitigen Zufuhr von Gebläseluft zur Siebdruckschablone 1 während der Rücksaugphase durch den Reitstock 5 weiterhin Gebläseluft zugeführt werden kann, so daß ein ausreichender Innendruck in der Siebdruckschablone und eine ausreichende Strömungsmenge zur Rückbeförderung der Abdichtkörper, jetzt durch den Hohlwellenabschnitt 9 hindurch, auch in diesem Ausführungsfall sichergestellt ist.

Der Vorratsbehälter 64 ist nach Art eines Zyklons aufgebaut. Der Strömungskanal 11, kommend vom Hohlwellenabschnitt 9, mündet in einer Öffnung 68 im oberen Drittel des Vorratsbehälters 64 etwa tangential in diesen. Im unteren Teil des Vorratsbehälters 64, also im konischen Teil, befindet sich der Vorrat an Abdichtkörpern 65. Während der Gravurphase wird Luft durch den Strömungskanal 11a in den Vorratsbehälter 64 geblasen, wobei der Strömungskanal 11a senkrecht auf den Vorrat an Abdichtkörpern 65 zuläuft. Der Strömungskanal 11a erstreckt sich also konzentrisch zur Mittelachse des Vorratsbehälters 64 und weist auf dessen Bodenfläche zu. Das freie Ende des Strömungskanals 11a außerhalb des Vorratsbehälters 64 ist z. B. mit dem Gebläse 47 in Figur 2 verbunden. Der sich ab dem Ende 11b des Strömungskanals 11a ausbildende Freistrahl trifft auf der Oberfläche des Abdichtkörpervorrats auf und wirbelt von dort die leichten Abdichtkörper 65 nach oben, die dann von der Strömung mitgerissen bzw. mitgetragen werden und über den Strömungskanal 11 und den Hohlwellenabschnitt 9 ins Innere der Siebdruckschablone 1 gelangen, wo sie in der bereits beschriebenen Weise die Siebdruckschablone 1 abdichten. Dabei kann sich der Freistrahl im Innern des Vorratsbehälters 64 nur dann ausbilden, wenn Luft in ausreichender Menge durch den Strömungskanal 11a hindurchströmt. Ist das Innere der Siebdruckschablone 1 bereits so gut abgedichtet, daß keine nennenswerte Strömung vorliegt, so bildet sich auch kein Freistrahl im Innern des Vorratsbehälters 64 aus und Abdichtkörper 65 werden nicht mitgerissen und daher auch nicht in die Siebdruckschablone 1 getragen.

Während der Rücksaugphase wird Luft über einen Rücksaugkanal 69 aus dem Vorratsbehälter 64 abgesaugt. Im Innern des Vorratsbehälters 64 ist ein kegelstumpfförmiges Sieb 70 vorgesehen, daß ausgehend vom Strömungskanal 11a in Richtung der Wand des Vorratsbehälters 64 nach unten geneigt ist. Wegen seiner großflächigen Dimensionierung bewirkt dieses Sieb 70, daß in seinem Bereich die Luft sehr gleichmäßig und langsam strömt. Da bei langsamer Luftströmung die Abdichtkörper 65 nicht mehr von der Luft getragen werden können, sinken diese im Vorratsbehälter 64 nach unten. Die tangentielle Einmündung des Strömungskanals 11 in den Vorratsbehälter 64 bewirkt über dies die Ausbildung einer Wirbelströmung im Vorratsbehälter 64 während der Rücksaugphase, wodurch die Abscheidung der Abdichtkörper 65 unterstützt wird. Die Wirbelströmung schleudert die Abdichtkörper 65 an den Rand des Vorratsbehälters 64. Da wegen der Wandreibung die vertikale Strömungskomponente dort besonders gering ist, sinken die Abdichtkörper 65 hier unter dem Einfluß der Schwerkraft bevorzugt nach unten in den Vorratsbereich.

Zwischen dem Vorratsbehälter 64 und dem Hohlwellenabschnitt 9 kann eine Zuführeinrichtung 71 vorhanden sein, um ein flüssiges Medium oder ein pulverförmiges Medium der Strömung zum Siebdruckzylinders 1a zuzusetzen. Soll Wasser zugeführt werden, so endet ein Leitungsrohr 72 mit einer Düse im Strömungskanal 11. Ein Ventil 73 wird über einen elektro-magnetischen Ventilantrieb 74 bei Bedarf geöffnet und geschlossen. Bei Zuführung eines pulverförmigen Abdichtmediums in den Strömungskanal 11 kann z. B. eine nicht dargestellte Schnecke den Transport des pulverförmigen Mediums übernehmen, wobei die Schnecke innerhalb eines Transportkanals zu liegen kommt, der in den Strömungskanal 11 mündet.

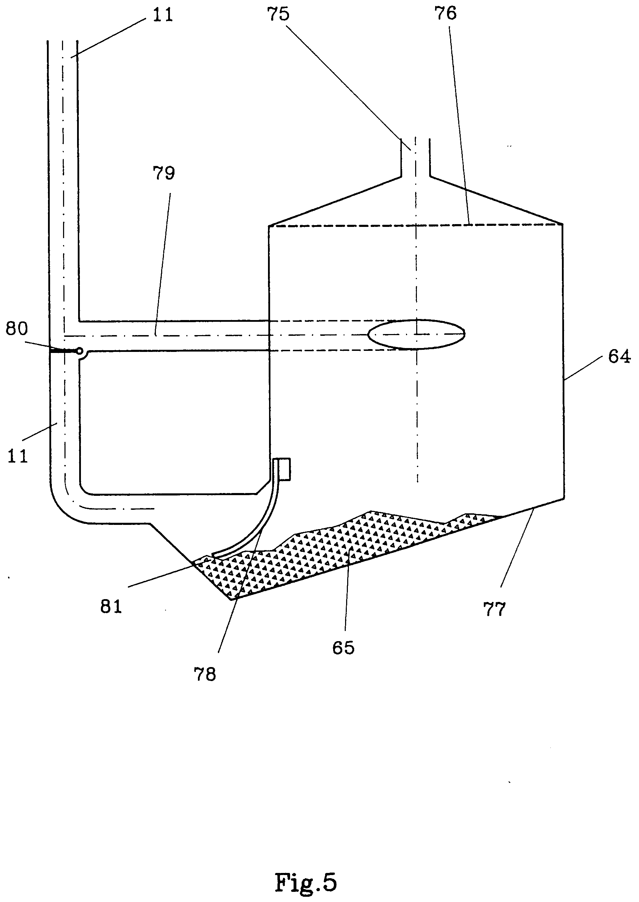

Die Figur 5 zeigt eine etwas andere Bauweise eines Vorratsbehälters 64 für Abdichtkörper 65. Luft strömt hier während der Gravurphase durch einen vertikal verlaufenden Strömungskanal 75 in den Vorratsbehälter 64 ein. Ein Sieb 76 im Vorratsbehälter 64 und horizontal liegend bewirkt eine langsame und gleichmäßige Durchströmung des Vorratsbehälters 64, auf dessen Boden sich die Abdichtkörper 65 befinden. Durch eine schräge Anordnung eines Bodenblechs 77 rutschen die Abdichtkörper 65 vorzugsweise in den linken Bereich des Vorratsbehälters 64, wo sich eine flexible Schürze 78 befindet. Während der Gravurphase ist ein Kanal 79, der tangential in den Vorratsbehälter 64 einmündet, durch eine Klappe 80 geschlossen. Die Luft aus dem Kanal 75, sofern sie von der hier nicht mehr dargestellten Siebdruckschablone hindurchgelassen wird, muß dann durch einen sehr engen Kanal 81, der durch die Schürze 78 flexibel verschlossen wird, hindurchströmen, so daß die Luft hier eine entsprechend hohe Geschwindigkeit hat. Dadurch können die leichten Abdichtkörper 65 hier aufgewirbelt und über den bereits erwähnten Kanal 11 in die Siebdruckschablone 1 transportiert werden. Auch der Kanal 79 mündet in den Strömungskanal 11, ist jedoch jetzt, wie bereits erwähnt, durch die Klappe 80 verschlossen. Während der Rücksaugphase öffnet die Klappe 80 den Kanal 79 und verschließt den unteren Teil des Strömungskanals 11, der mit dem unteren Ende des Vorratsbehälters 64 in Verbindung steht. Auch während der Rücksaugphase wird wiederum eine Wirbelströmung erzeugt, deren vertikale Strömungskomponente aber nur sehr klein ist, wodurch an die Wand des Vorratsbehälters 64 geschleuderte Abdichtkörper 65 langsam zu Boden fallen und sich wiederum im Bereich der flexiblen Schürze 78 ansammeln. Während der Rücksaugphase strömen also die Abdichtkörper 65 durch den Kanal 11 nach unten, werden durch die Klappe 80 in Richtung des Kanals 79 abgelenkt und gelangen dann in den Vorratsbehälter 64.

Auch hier kann im Bereich des Strömungskanals 11 oberhalb der Klappe 80 die zuvor erwähnte Zuführeinrichtung 71 für flüssiges oder pulverförmiges Abdichtmedium vorhanden sein.

## Patentansprüche

1. Verfahren zur Herstellung einer Siebdruckschablone (1), bei dem eine auf der Oberfläche eines sich drehenden Siebdruckzylinders (1a) liegende Lackschicht (63) mittels eines wenigstens annähernd radial auf den Siebdruckzylinder (1a) auftreffenden und in dessen Axialrichtung bewegten Laserstrahls (19) punktweise bestrahlt wird, **dadurch gekennzeichnet**, daß
- der Siebdruckzylinder (1a) nur im Bereich seiner sich gegenüberliegeden Stirnseiten abgestützt und
- über wenigstens eine dieser Stirnseiten durch ein Druckgas von bis zu 20 000 Pa so aufgeblasen wird, daß er einen kreisrunden Querschnitt erhält.

2. Verfahren nach Anspruch 1, **dadurch gekennzeichnet**, daß Druckgas über beide Stirnseiten in den Siebdruckzylinder (1a) hineingeblasen wird.

3. Verfahren nach Anspruch 1 oder 2, **dadurch gekennzeichnet**, daß als Druckgas Luft verwendet wird.

4. Verfahren nach einem der Ansprüche 1 bis 3, **dadurch gekennzeichnet**, daß die Lackschicht (63) mit Hilfe des Laserstrahls (19) weggebrannt wird, um eine Perforation des Siebdruckzylinders (1a) zur Herstellung eines Musters bereichsweise freizulegen.

5. Verfahren nach Anspruch 4, **dadurch gekennzeichnet**, daß mit dem Druckgas Abdichtkörper (65) in den Siebdruckzylinder (1a) hineingeblasen werden, um ihn im Bereich seiner freigelegten Perforation abzudichten.

6. Verfahren nach Anspruch 5, **dadurch gekennzeichnet**, daß als Abdichtkörper (65) schicht- oder kugelförmige Körper verwendet werden.

7. Verfahren nach Anspruch 5 oder 6, **dadurch gekennzeichnet**, daß als Abdichtkörper (65) lichtreflektierende Körper verwendet werden.

8. Verfahren nach einem der Ansprüche 5 bis 7, **dadurch gekennzeichnet**, daß zusätzlich zu den Abdichtkörpern (65) ein flüssiges oder pulverförmiges Medium in den Siebdruckzylinder (1a) hineingeblasen wird.

9. Verfahren nach einem der Ansprüche 5 bis 8, **dadurch gekennzeichnet**, daß nach Herstellung des Musters die Abdichtkörper (65) sowie ggf. das flüssige oder pulverförmige Medium wieder aus dem Siebdruckzylinder (1a) herausgesaugt und/oder herausgeblasen werden.

10. Verfahren nach einem der Ansprüche 4 bis 9, **dadurch gekennzeichnet**, daß mit steigender Öffnung des Siebdruckzylinders (1a) diesem eine größere Druckgasmenge zugeführt wird.

11. Vorrichtung zur Herstellung einer Siebdruckschablone mit:
- einer Einspannvorrichtung zum drehbaren Einspannen eines Siebdruckzylinders (1a), der auf seiner Oberfläche eine lichtempfindliche Lackschicht (63) trägt,
- einem Laser (17) zur Erzeugung eines Laserstrahls (19), und
- einem parallel zur Längsrichtung des Siebdruckzylinders (1a) bewegbaren Schlitten (23) mit einer Ablenkeinrichtung (22), die den Laserstrahl (19) so ablenkt, daß dieser wenigstens annähernd radial auf den Siebdruckzylinder (1a) auftrifft, **dadurch gekennzeichnet**, daß
- die Einspannvorrichtung aus nur zwei Zentrierflanschen (2, 3) besteht, von denen jeweils einer in eine der Stirnseiten des Siebdruckzylinders (1a) einführbar ist, und
- der Siebdruckzylinder (1a) über einen Innenkanal (9, 10) in wenigstens einem der Zentrierflansche (2, 3) mit einem Gebläse (47, 62) verbunden ist, das unter einem Druck von bis zu 20 000 Pa stehendes Gas in einer so großen Menge liefert, daß der Giebdruckzylinder (1a) einen kreisrunden Querschnitt beibehält.

12. Vorrichtung nach Anspruch 11, **dadurch gekennzeichnet**, daß der Siebdruckzylinder (1a) über Innenkanäle in beiden Zentrierflanschen (2, 3) mit jeweils einem Gebläse (47, 62) in Verbindung steht.

13. Vorrichtung nach Anspruch 11 oder 12, **dadurch gekennzeichnet**, daß im Strömungsweg zwischen dem Gebläse (47, 62) und dem Siebdruckzylinder (1a) ein Vorratsbehälter (64) liegt, in dem sich Abdichtkörper (65) befinden, die vom geförderten Gasstrom in den Siebdruckzylinder (1a) mitgenommen werden.

14. Vorrichtung nach Anspruch 13, **dadurch gekennzeichnet**, daß zwischen dem Vorratsbehälter (64) und dem Siebdruckzylinder (1a) eine Zuführeinrichtung (71) für ein flüssiges oder pulverförmiges Medium vorhanden ist, das von der Strömung zum Siebdruckzylinder (1a) mitgenommen wird.

15. Vorrichtung nach Anspruch 13 oder 14, **dadurch gekennzeichnet**, daß die Förderrichtung des Gebläses (47, 62) umschaltbar ist.

## Claims

1. Method for producing a screen printing stencil (1), in which a lacquer layer (63) situated on the surface of a rotating screen printing cylinder (1a) is irradiated in a punctiform fashion by means of a laser beam (19) which impinges at least approximately radially on the screen printing cylinder (1a) and is moved in the axial direction thereof, characterized in that
- the screen printing cylinder (1a) is supported only in the region of its opposite end faces and
- is inflated over at least one of these end faces by means of a compressed gas of up to 20 000 Pa that it assumes a circular cross-section.

2. Method according to Claim 1, characterized in that compressed gas is blown into the screen printing cylinder (1a) via both end faces.

3. Method according to Claim 1 or 2, characterized in that air is used as the compressed gas.

4. Method according to one of Claims 1 to 3, characterized in that the lacquer layer (63) is burnt away with the aid of the laser beam (19) in order partially to expose a perforation of the screen printing cylinder (1a) for the purpose of producing a pattern.

5. Method according to Claim 4, characterized in that sealing elements (65) are blown into the screen printing cylinder (1a) by means of the compressed gas in order to seal said cylinder in the region of its exposed perforation.

6. Method according to Claim 5, characterized in that laminated or spherical elements are used as the sealing elements (65).

7. Method according to Claim 5 or 6, characterized in that light-reflecting elements are used as the sealing elements (65).

8. Method according to one of Claims 5 to 7, characterized in that in addition to the sealing elements (65) a liquid or pulverulent medium is blown into the screen printing cylinder (1a).

9. Method according to one of Claims 5 to 8, characterized in that after production of the pattern the sealing elements (65) and, as the case may be, the liquid or pulverulent medium are once again sucked out and/or blown out of the screen printing cylinder (1a).

10. Method according to one of Claims 4 to 9, characterized in that as the opening of the screen printing cylinder (1a) increases the latter is fed a larger quantity of compressed gas.

11. Device for producing a screen printing stencil, having:
- a clamping device for rotatably clamping a screen printing cylinder (1a) which bears on its surface a photosensitive lacquer layer (63),
- a laser (17) for producing a laser beam (19), and
- a carriage (23) which can be moved parallel to the longitudinal direction of the screen printing cylinder (1a) and has a deflecting device (22) which deflects the laser beam (19) in such a way that the latter impinges at least approximately radially on the screen printing cylinder (1a), characterized in that
- the clamping device consists of only two centring flanges (2, 3), of which in each case one can be inserted into one of the end faces of the screen printing cylinder (1a), and
- the screen printing cylinder (1a) is connected via an internal duct (9, 10) in at least one of the centring flanges (2, 3) to a fan (47, 62) which supplies gas, which is under a pressure of up to 20 000 Pa, in a sufficient amount for the screen printing cylinder (1a) to maintain a circular cross-section.

12. Device according to Claim 11, characterized in that the screen printing cylinder (1a) is connected via internal ducts in both centring flanges (2, 3) to in each case one fan (47, 62).

13. Device according to Claim 11 or 12, characterized in that there is situated in the flow path between the fan (47, 62) and the screen printing cylinder (1a) a reservoir (64) in which there are located sealing elements (65) which are entrained by the delivered gas flow into the screen printing cylinder (1a).

14. Device according to Claim 13, characterized in that there is present between the reservoir (64) and the screen printing cylinder (1a) a feeder device (71) for a liquid or pulverulent medium which is entrained by the flow to the screen printing cylinder (1a).

15. Device according to Claim 13 or 14, characterized in that the delivery direction of the fan (47, 62) can be reversed.

## Revendications

1. Procédé de fabrication d'un écran pour sérigraphie (1), dans lequel une couche de vernis ou de la laque (63) déposée sur la surface d'un cylindre pour sérigraphie (1a) rotatif est exposée point par point à la lumière d'un rayon laser (19), qui tombe au moins pratiquement dans le sens radial sur le cylindre pour sérigraphie (1a) et qui est déplacé dans le sens axial de ce dernier, caractérisé en ce que
- le cylindre pour sérigraphie (1a) n'est maintenu que dans la zone de ses faces frontales opposées et
- est gonflé par un gaz sous une pression allant jusqu'à 20 000 Pa, insufflé par au moins une de ces faces frontales, de manière à ce qu'il présente une section transversale circulaire.

2. Procédé selon la revendication 1, caractérisé en ce que le gaz sous pression est insufflé par les deux faces frontales à l'intérieur du cylindre pour sérigraphie (1a).

3. Procédé selon la revendication 1 ou 2, caractérisé en ce que le gaz sous pression utilisé est de l'air.

4. Procédé selon l'une quelconque des revendications 1 à 3, caractérisé en ce que la couche de vernis (63) est enlevée par combustion sous l'effet du rayon laser (19), afin de dégager une zone de perforation sur le cylindre pour sérigraphie (1a) pour la fabrication d'un dessin.

5. Procédé selon la revendication 4, caractérisé en ce que des corps de colmatage (65) sont insufflés dans le cylindre pour sérigraphie (1a) avec le gaz sous pression, afin de rendre étanches les zones de perforation dégagées sur ledit cylindre pour sérigraphie.

6. Procédé selon la revendication 5, caractérisé en ce que les corps de colmatage (65) utilisés sont des corps en forme de feuilles ou de billes.

7. Procédé selon la revendication 5 ou 6, caractérisé en ce que les corps de colmatage (65) utilisés sont des corps qui réfléchissent la lumière.

8. Procédé selon l'une quelconque des revendications 5 à 7, caractérisé en ce qu'un milieu liquide ou pulvérulent est insufflé, en plus des corps de colmatage (65), à l'intérieur du cylindre pour sérigraphie (1a).

9. Procédé selon l'une quelconque des revendications 5 à 8, caractérisé en ce que, après la réalisation du dessin, les corps de colmatage (65), ainsi que, le cas échéant, le milieu liquide ou pulvérulent sont à nouveau aspirés et/ou soufflés hors du cylindre pour sérigraphie (1a).

10. Procédé selon l'une quelconque des revendications 4 à 9, caractérisé en ce que, avec l'ouverture croissante du cylindre pour sérigraphie (1a), une plus grande quantité de gaz sous pression est insufflée à ce cylindre.

11. Dispositif de fabrication d'un écran pour sérigraphie comprenant :
- un dispositif de serrage pour fixer de manière à pouvoir tourner un cylindre pour sérigraphie (1a), dont la surface est revêtue d'une couche de vernis (63),
- un laser (17) pour produire un rayon laser (19), et
- un chariot mobile (23), parallèle à l'axe longitudinal du cylindre pour sérigraphie (1a), comprenant un dispositif de déviation (22), qui dévie le rayon laser (19) de telle sorte qu'il tombe au moins pratiquement dans le sens radial sur le cylindre pour sérigraphie (1a),
caractérisé en ce que
- le dispositif de serrage ne comprend que deux brides de centrage (2, 3), chacune étant susceptible d'être introduite dans l'une des faces frontales du cylindre pour sérigraphie (1a), et
- le cylindre pour sérigraphie (1a) communique, par l'intermédiaire d'un canal intérieur (9, 10) réalisé dans au moins l'une des brides de centrage (2, 3), avec une soufflerie (47, 62) qui délivre du gaz soumis à une pression allant jusqu'à 20 000 Pa, en une quantité suffisante pour qu'elle maintienne une section transversale circulaire du cylindre pour sérigraphie (1a).

12. Dispositif selon la revendication 11, caractérisé en ce que le cylindre pour sérigraphie (1a) communique, par l'intermédiaire de canaux intérieurs réalisés dans les deux brides de centrage (2, 3), dans chaque cas avec une soufflerie (47, 62)

13. Dispositif selon la revendication 11 ou 12, caractérisé en ce qu'un récipient de stockage (64) est monté dans le trajet d'écoulement entre la soufflerie (47, 62) et le cylindre pour sérigraphie (1a), lequel récipient de stockage contient des corps de colmatage (65) qui sont entraînés par l'écoulement de gaz acheminé dans le cylindre pour sérigraphie (1a).

14. Dispositif selon la revendication 13, caractérisé en ce qu'un dispositif d'alimentation (71) contenant un milieu liquide ou pulvérulent est monté entre le récipient de stockage (64) et le cylindre pour sérigraphie (1a), ledit milieu étant entraîné par l'écoulement vers le cylindre pour sérigraphie (1a).

15. Dispositif selon la revendication 13 ou 14, caractérisé en ce que le sens de transport de la soufflerie (47, 62) est susceptible d'être inversé.
